# EUROPEAN PATENT APPLICATION

(11) **EP 4 579 452 A1**
(43) Date of publication of application: **02.07.2025**
(21) Application number: 24222034.1
(22) Date of filing: 20.12.2024
(51) Int. Cl.: G06F 9/451

(54) **INTELLIGENT SENSING OF SCREEN CONTENT UPDATES FOR USER CONTEXT PROCESSING**

(30) Priority: 28.12.2023 US 202318399022
(71) Applicant: INTEL Corporation, Santa Clara, CA 95054 (US); Abdelhak, Sherine, Beaverton, Oregon 97006 (US)
(72) Inventor: ABDELHAK, Sherine, Beaverton, OR Oregon 97006 (US); MANEPALLI, Sangeeta, Chandler, 85249 (US); Baran, Stanley, Chandler, 85248 (US); BALGURI, Mamatha, Portland, 97229 (US); SABHARWAL, Manuj, Folsom, 95630 (US); FLEMING, Kristoffer D., Chandler, 85249 (US); IYENGAR, Saranya, Portland, 97229 (US); SUBRAHMANYAM, Prabhakar, San Jose, 95126 (US)
(74) Representative: 2SPL Patentanwälte PartG mbB

(57) **Abstract**

Various systems and methods for contextual capture and processing of screen capture data are disclosed. An example method for screen capture data processing in a computing device may include: determining an active screen of the computing device based on a user interaction event; identifying a graphics rendering event associated with a software application presented in the active screen; identifying screen capture data in a buffer (e.g., of graphics processing circuitry such as a GPU) that corresponds to the graphics rendering event; and communicating a contextual screen update event via an application programming interface (e.g., a an API operated by a GPU driver). The receipt of this contextual screen update event can be used by an AI engine to control whether to perform contextual processing on particular frames of the screen capture data.

## Description

### BACKGROUND

A variety of applications are being developed that perform a compute operation based on the screen content presented to a user. For example, various generative artificial intelligence (AI) use cases have been proposed for client systems that analyze the contextual data being shown to a user, based on a continuous screen capture process. Content that is presented on a user's screen may be captured, analyzed by an AI engine, and saved; then immediately or at a later time, this data can be analyzed and communicated to a user in the form of assistive or generative content produced from another AI service or application.

Capturing frames of a screen capture frequently and then processing those frames, even at rates of 2-5 frames per second (fps), involves a significant amount of compute resources, memory, and data. Even if a specialized AI engine is used to process the frames, the computation of this sustained background task will greatly affect the power consumption and battery life of a mobile device. Thus, a variety of technical issues and challenges are involved to enable the capture, analysis, and use of screen capture data and related AI engine processing of such screen capture data on computing devices.

### BRIEF DESCRIPTION OF THE DRAWINGS

In the drawings, which are not necessarily drawn to scale, like numerals may describe similar components in different views. Like numerals having different letter suffixes may represent different instances of similar components. Some embodiments are illustrated by way of example, and not limitation, in the figures of the accompanying drawings in which:
FIG. 1 illustrates a computing scenario including the presentation of screen content via an operating system and software applications, according to an example;
FIG. 2 illustrates a data flow for invoking an AI context service or application, according to an example;
FIG. 3 illustrates a data flow for processing screen captures using a background AI inference engine, according to an example;
FIG. 4 illustrates a use case for screen capture based on an example timeline that represents user screen activity, according to an example;
FIG. 5 illustrates a flowchart of a method for contextual screen capture data processing, according to an example;
FIG. 6 is a block diagram illustrating a computing system configured to perform contextual screen capture data processing, according to an example; and
FIG. 7 is a block diagram illustrating an example machine upon which any one or more of the techniques (e.g., methodologies) discussed herein may perform, according to an example.

### DETAILED DESCRIPTION

In the following description, for purposes of explanation, numerous specific details are set forth in order to provide a thorough understanding of some example embodiments. It will be evident, however, to one skilled in the art that the present disclosure may be practiced without these specific details.

The following disclosure relates to improvements in the identification of screen capture events, handling of graphics rendering events for screen captures, and related processing of screen capture data. Current functionality and requirements for running generative AI on client computing systems have indicated an expectation to operate a continuous screen capture process so that user context can be fully captured and analyzed with an ongoing timeline. However, the analysis of screen capture data has a significant impact on power and battery life due to sustained bandwidth and compute usage.

The techniques discussed herein provide improved approaches for determining when screen information has been updated and what screen information has been updated. This provides improved power consumption, reduced memory requirements, and reduced computation for the analysis of screen captures-with minimal or no impact on user experience. These approaches include the generation of screen update events to indicate when new or updated content is presented to a user on an active screen and an asynchronous interaction pipeline that enables an AI context-building engine (e.g., provided by an AI application or service) to process these screen update events.

Some of the prior approaches for determining whether a screen has changed include performing pixel comparisons from a first frame to a second frame, and determining whether the screen capture presents new data based on any change in the pixel data. However, such an approach involves processing actions to compare and evaluate a large number of pixels, regardless of whether the changed pixel data is actually relevant to a user context. Also, one proposed workaround involves reducing the number or frequency of screen captures for contextual data processing, such as by reducing the frames-per-second (fps) rate of captured screen data. Although this workaround can reduce compute and power requirements, it reduces the accuracy of determining user context and may entirely miss context from fast-moving video or rapid user actions. With the presently discussed approaches, unnecessary screen content frames are not captured, with no reduction in accuracy.

In one aspect of the following implementations, application and system events are evaluated so that an active screen or application can be identified-and so that data is not captured from a screen or application not in use. The evaluation of application and system events may include the evaluation of interaction from a human interface device (HID) that triggers or indicates an event for screen capture. Also, an operating system foreground and background application indication may be used to identify which portion of the screen content(s) has experienced an update. This can reduce graphics processing to only necessary screen content that is being interacted with and actively updated. For instance, in many regular computing settings with a multi-per-second screen capture rate, as many as over 90 percent of the screen frames are repeated without any screen content changing. Significant processing and power savings can be obtained if an AI engine is not invoked to process data from these duplicative frames.

In another aspect of the following implementations, an application programming interface (API) for indicating screen updates is hosted in a GPU driver. Among other functions, this API can provide an AI engine (or other consuming applications/services) with an asynchronous notification that screen content has changed or is available for processing. Thus, this AI engine or other specific applications/services of an operating system can actively listen to receive a notification when screen content has changed.

Many of the examples discussed herein discuss the use of an AI engine such as provided in a background user context task or service operated by an operating system such as Windows^{®}, Mac OS^{®}, Android^{®}, and the like. However, it will be apparent that the approaches for screen capture and data processing may be applicable to the control, activation/de-activation, or interfacing with other types of tasks, services, and installed applications on these and other operating systems. For instance, other applications and services that do not involve AI processing may use the present API and event-based notifications to control whether to record or save screen content to a data store.

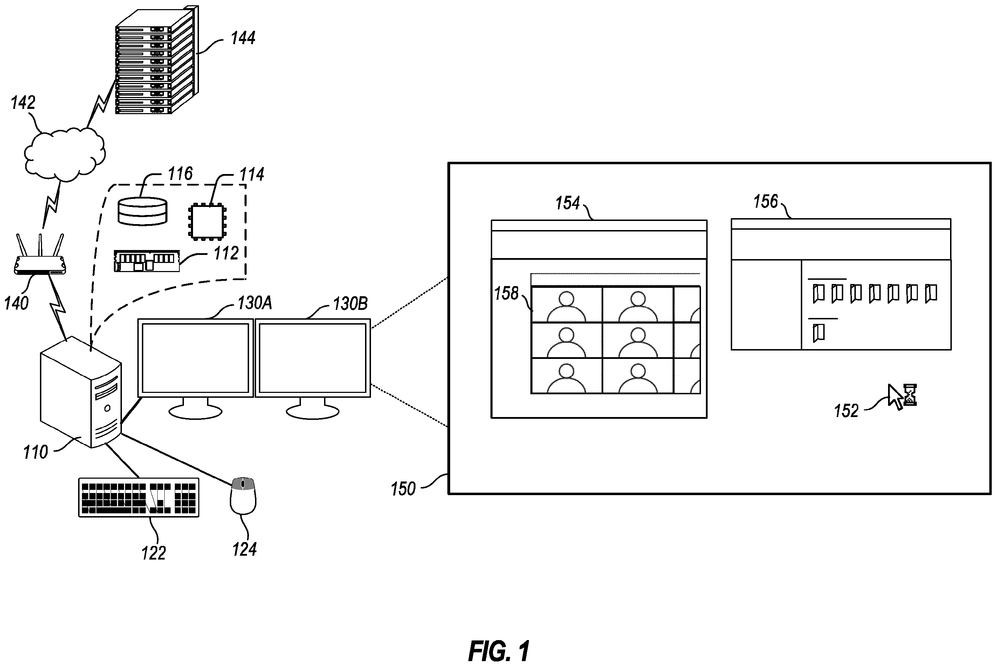

FIG. 1 illustrates an example computing scenario including the presentation of screen content via an operating system and software applications. Here, a computing device 110 (also referred to herein as a computing system) presents graphical content via one or more display devices such as a first display device 130a and a second display device 130b. The first display device 130a and the second display device 130b are separate monitor devices, and are arranged in a multiple monitor configuration, where each monitor presents a respective display "screen" from an operating system of the computing device. It will be understood that the techniques discussed herein are applicable to other display arrangements, including in a single display screen that is presented and updated across a single or multiple output devices.

A particular instance of all or a portion of the graphical content at a point in time that is presented with a display screen, when captured and persisted in some memory device or storage, is referred to herein as a "screen capture." For instance, the second display device 130b presents a screen capture frame 150 at a particular point in time. As a non-limiting example, the screen capture frame 150 depicts a cursor 152, a first application 154 (e.g., a video conference application that presents video 158), and a file viewing application 156. A variety of arrangements and amounts of text and graphical content (including frames of a video or video stream) may be presented on any particular screen frame.

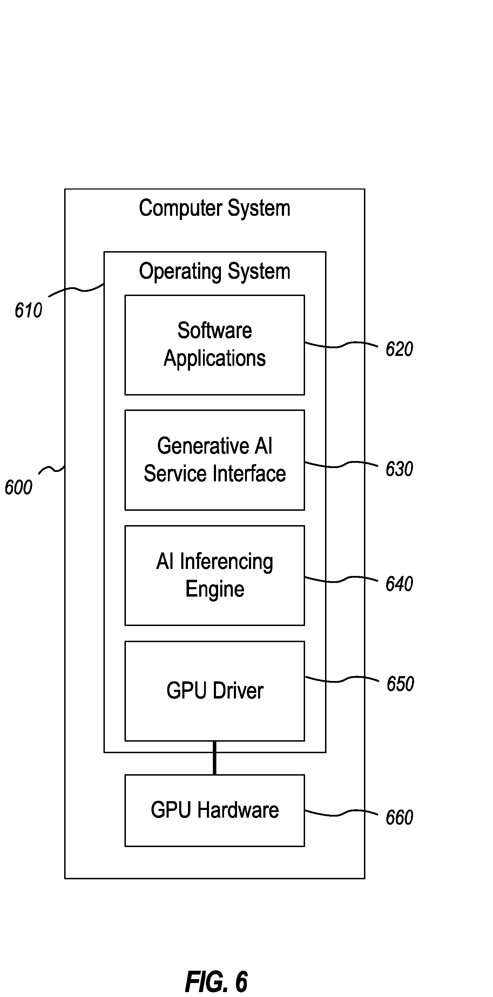

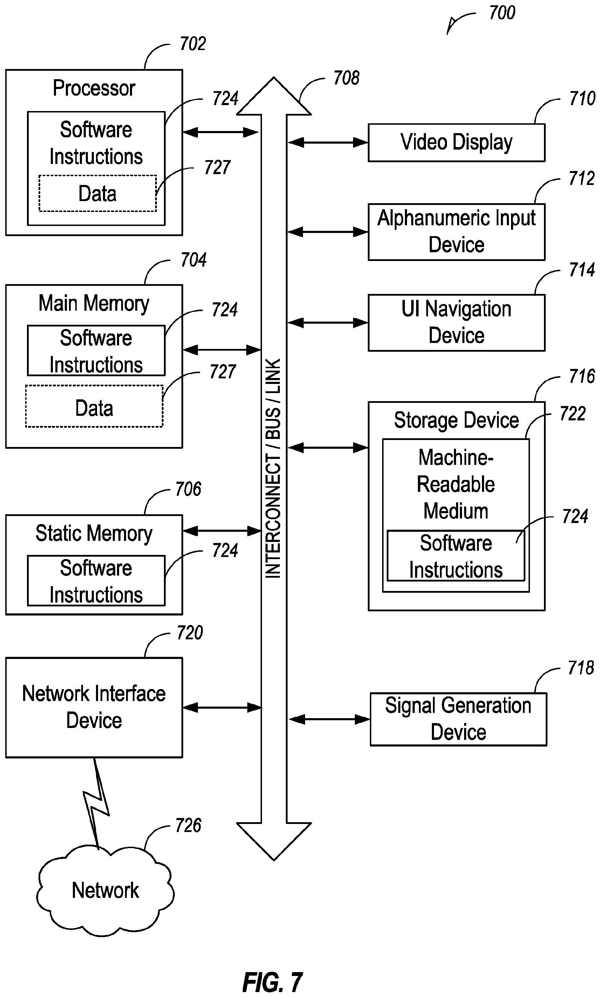

The computing device 110 includes memory 112, processing circuitry 114 (e.g., CPU, GPU, etc.), and data storage 116. An operating system and a variety of software applications and services are installed on the computing device 110, and operate via the memory 112, the processing circuitry 114, and the data storage 116, to generate and output the display content. Additional details on example computer architectures and functionality are provided in FIGS. 6 and 7 below. The computing device 110 is operably coupled to one or more human interface devices (HIDs) that provide or capture input such as a keyboard 122, a mouse 124, a touchscreen (not shown), a microphone, camera, or presence sensor (not shown), and the like. Although a desktop computer is illustrated as the computing device 110, the computing device 110 may be provided from a tablet, notebook/laptop, server, workstation/thin client, mobile device, and other form factors in other examples.

In an example, the computing device 110 is connected to a cloud server or system 144 via a local area network 140 and a wide area network 142. For instance, the cloud server or system 144 may operate various AI processing operations such as a generative AI service operated in whole or in part on the cloud. The cloud server or system 144 may also communicate trained models and data for use of an AI engine on the computing device 110.

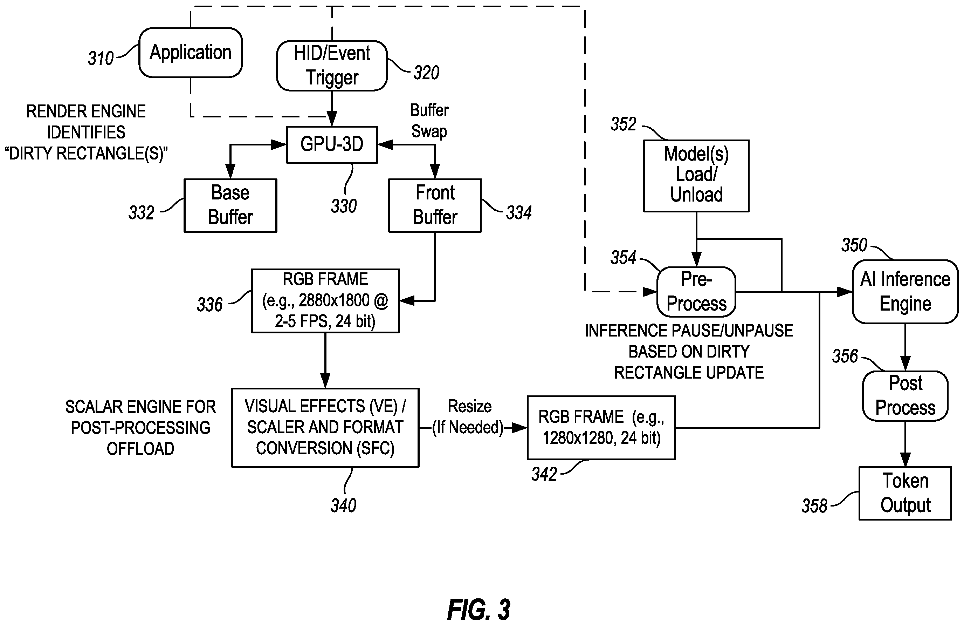

An example use case for AI processing of screen capture data includes the use of a user activity timeline "rewind" or "replay" function, which is based on the recording of all contextual activity occurring between a user and the applications of the operating system on the computing device 110. Another non-limiting example includes contextual content recorded by the "Rewind.AI" background service. Either example may be implemented with the use of an AI engine operating locally on the computing device 110. The AI engine can extract graphical content from screen content data and convert the graphical content into another format (e.g., a text token) that is parseable by another AI model or service. An example workflow involving AI-engine text tokens is discussed with reference to FIG. 3, below.

An AI engine may integrate with the use of other generative AI services (e.g., a text chatbot such as ChatGPT, or a graphics engine such as DALL-E) to generate useful generative content for a user of computing device 110. For example, one possible query might include, a user asking, "What email did I review last week discussing a real estate lease?" Because the screen capture process previously captured this context-from a screen shot of the email application that presented the relevant email text-a generative AI process can analyze text tokens produced from the AI engine and provide a useful response. (E.g., a text response, "You viewed an email on December 10 from John McCarthy discussing Scottsdale Office Lease. Click here to open the email.").

Capturing screen capture frames frequently (e.g., at a rate of 2-5 fps or higher) and processing those frames in a contextual recording service requires significant AI compute. Even if a specialized AI engine is configured and optimized as a background service or task or is running on specialized AI hardware, the compute required by this sustained background activity-always operating when the system is on-greatly affects power consumption and battery life. The following approaches introduce an API-based mechanism for smartly determining and communicating when screen capture frames provide relevant data to be processed, and when the processing can be skipped.

Four aspects are involved with the processing approaches below for context-sensitive screen captures. First, HID events (e.g., cursor movement or keyboard input) and an operating system foreground/background application indication are evaluated to determine which screen(s) in a multi-screen system include content to be captured. This can reduce screen capture processing only to screens that are being updated or being actively interacted with (also referred to herein as an "active screen").

Second, specific graphical rendering information is monitored to determine which screen frames or which content in screen frames has changed. For instance, in a Windows^{®} system, a "Dirty rectangle" indication provided from the flip presentation model in DirectX Graphics Infrastructure (DXGI) can be used to identify frames that have updated content.

Third, a GPU driver is adapted to monitor the graphical rendering information to identify when a screen frame in a screen frame buffer is new, changed, or updated with relevant contextual content. For example, the GPU driver can use information from the DXGI flip model to identify when a frame buffer has changed (e.g., with a new screen capture of an active screen).

Fourth, the GPU driver is adapted to introduce a user mode API for communicating screen capture update events. For example, this user mode API can provide an asynchronous event to specific applications/services (such as an AI engine) to notify when the active screen content has changed. Then, if an event is not received from this user mode API, the specific applications/services can skip unnecessary screen content processing (e.g., because the screen content is not relevant or has not changed).

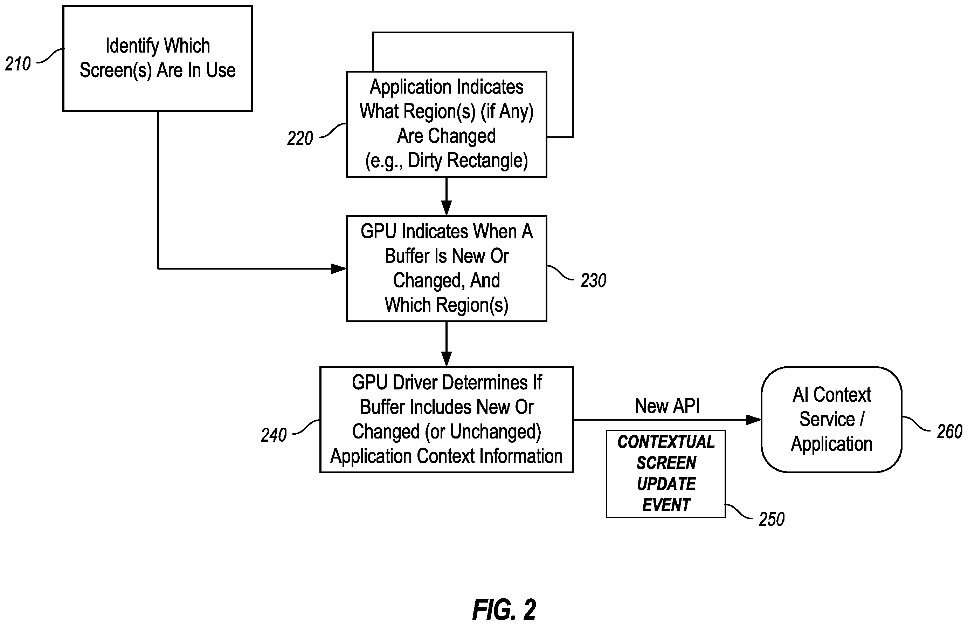

FIG. 2 illustrates an example data flow for invoking an AI context service or application based on these aspects. As an example of output from this data flow, an API of a GPU driver provides a notification (e.g., an event 250) to an AI context service or application 260 of a screen capture update. The following data processing blocks 210-240 are used to evaluate the specific conditions of when this notification should or should not be provided.

At data processing block 210, operations are performed to identify which screens are being actively used by a user. This may include identifying which screens are receiving HID events and/or operating system foreground/background application indications. This may involve additional rules or analysis to determine which screen(s) include relevant content to be captured, so that events and processing can be limited to only the active screen(s) that are receiving user interaction.

The data processing block 210 may include user tracking and awareness of which screen the user is using or watching. This tracking may occur through methods such as face tracking or gaze/eye detection (e.g., as determined with a user presence sensor or camera). This tracking may also occur via simple event tracking such as the detection of keystrokes, touch, and mouse events in the operating system. Accordingly, a screen can be determined as an "active screen" only if a user is interacting with a mouse, keyboard, or touch input on the screen, and/or only if the user is looking at the screen. This avoids analyzing frame buffers for displays that the user is not using, and reduces the processing needed across the screen capture pipeline when multiple display screens are rendered.

Other types of HID events can be used to track which screen the user is operating and which applications(s) (and what location(s)) the user is interacting with. For example, consider a scenario where a user has a video conference session on one screen but a word processing document on the other screen, but the user is not looking at either of the screens. In this setting, a determined context may indicate that the user is away, and that screen capture information can be ignored. Other analysis of HID events can be used to determine where (e.g., what locations or coordinates in the screen) the user is focusing on and what contextual information is related to the user activity. This analysis of HID events might also be based on hardware settings, mouse speed, or other settings that take system variability into account.

At data processing block 220, a graphical rendering event is used to determine what regions, if any, are changed in a particular application. In a Windows system, this graphical rendering event may be provided via a "Dirty Rectangle" event generated from the DXGI flip model. The Dirty Rectangle event can be used to indicate the parts of the screen that are updated in a graphics buffer, and thus which screen capture frames include updated content.

Specifically, the graphical rendering event can be used to determine if anything is new on a screen capture frame, relative to a previous screen capture frame that was identified or designated for context capture (a previous "context capture frame"). Because not every screen capture frame will be designated as a context capture frame, the system can track a union of regions from all frames between one context capture frame and the subsequent context capture frame. Thus, when multiple applications are running and shown on the display, indications from all of the multiple applications are used (in the union of changed regions) to determine if and where the screen has changed. In an example, this determination may be performed by the operating system (e.g., in Windows, by the Desktop Windows Manager) when determining the content to render on the screen. This graphical rendering information is then passed to the GPU driver for further processing.

At data processing block 230, a GPU driver obtains an indication that a screen capture frame, saved in a frame buffer, has been changed based on the graphical rendering event (e.g., an indication of a Dirty Rectangle as provided via the DXGI flip model). Then, the GPU driver can indicate that the graphical content in a particular frame in the buffer is new or changed, so that this particular frame can be identified to downstream sources (such as for further AI-processing).

At data processing block 240, a GPU driver provides a user mode API to communicate an asynchronous hint (the event 250) to specific applications or services. This event 250 is repeatedly sent to notify the application 260 that relevant screen content involving an application of an active screen has changed, and that the screen capture frame is new/sufficiently different for the collection of user context information. This determination of a changed screen capture frame may be based on a number of changed pixels, number of changed pixels in an area or window, type of change (e.g., amount of changed text), or other threshold comparisons/measurements. Accordingly, if the application 260 does not receive the event 250, the application 260 can skip screen content AI-processing (e.g., because the screen content has not changed or has not changed significantly enough).

In some examples, the API provided by the GPU driver can communicate detailed information indicating what regions have changed, so that AI-processing of the application 260 can have the option of only detecting and identifying content in those specific regions. The application 260 or the data processing block 240 may also perform additional actions to consider data privacy, security, and user preference settings, in connection with the capture and analysis of screen capture frames from specific applications, users, or contexts. Additional examples of privacy, security, and user preference settings are discussed below.

FIG. 3 illustrates a further example of data processing of screen captures for use by a background AI inference engine. Here, this example shows how the data flow of FIG. 2 may be implemented to identify user context from screen captures, via an AI inference engine 350. The AI inference engine 350 is configured to identify objects within specific screen capture frames, based on contextual screen update events that indicate that new or updated graphical content is provided in the screen capture frames. The AI inference engine 350 performs inferencing or other AI operations to generate data (tokens) based on the identified objects.

Events and activity occurring in a software application 310 (e.g., graphical rendering events, discussed above) and from a HID / user activity event trigger 320 (e.g., mouse or keyboard movement, discussed above) are monitored by a driver of a GPU 330. The GPU includes a base buffer 332 and a front buffer 334 to generate screen capture graphical data on an ongoing basis. For example, an example RGB frame 336 may be captured at a first high resolution (e.g., 2880x1800, at a particular frame rate and image quality in one example, or at a Full HD "FHD" resolution of 1920x1080, or at an Ultra HD "UHD" resolution of 3840x2160 in other examples). In some examples, the RGB frame 336 is provided to a scalar engine 340 for post-processing offload, such as with a visual effects and scaler and format conversion (SFC). This produces an RGB frame 342 in a reduced resolution format to be processed by an AI inference engine 350. This reduced resolution format may be used to match the input size of a neural network model, although other formats or the original format may be used. Other types of processing may include a color space conversion, such as if the captured frame color space is different than that used by the NN model.

The AI inference engine 350 is configured by engine pre-processing 354, such as by model loading and unloading operations 352 that cause the AI inference engine 350 to operate a particular model based on the type of graphical content, the type of application, etc. The AI inference engine 350 waits to perform an inference on the RGB frame 342 until the engine pre-processing 354 receives contextual screen update events from the GPU driver 330.

One example of screen capture data processing based on the use of the AI inference engine 350 includes identifying text on a screen, determining what the text says, and associate this text with some user context information (e.g., based on the time, and what else the user was doing in the computing system). The AI inference engine 350 may directly or indirectly generate token output 358 for use with other generative AI services and application. The AI inference engine 350 may also invoke engine post-processing 356 to associate the time and other computing context information with the token output 358.

As noted above, capturing screen capture frames frequently-whether at a relatively low rate of 2-5 fps, or at higher rates as much as 60 or more fps-and processing those screen capture frames requires an extensive amount of compute and results in an extensive battery life impact. Even if the AI inference engine 350 is a specialized engine, and even if the AI inference engine 350 operates on specialized AI hardware, the compute of this sustained background task (always operating when the system is on) will greatly affect battery life. An API-based mechanism (e.g., provided by a driver of the GPU 330) is used to communicate contextual screen update events, on-demand, based on a dirty rectangle update or another graphics rendering event. These events are received at engine pre-processing 354 to pause and unpause the AI inference engine 350 from processing a particular screen capture frame. Accordingly, the use of contextual screen update events, monitored by the engine pre-processing 354, can directly control when the AI inference engine 350 will perform processing of screen capture frames and when the AI inference engine 350 will skip the processing of the screen capture frames.

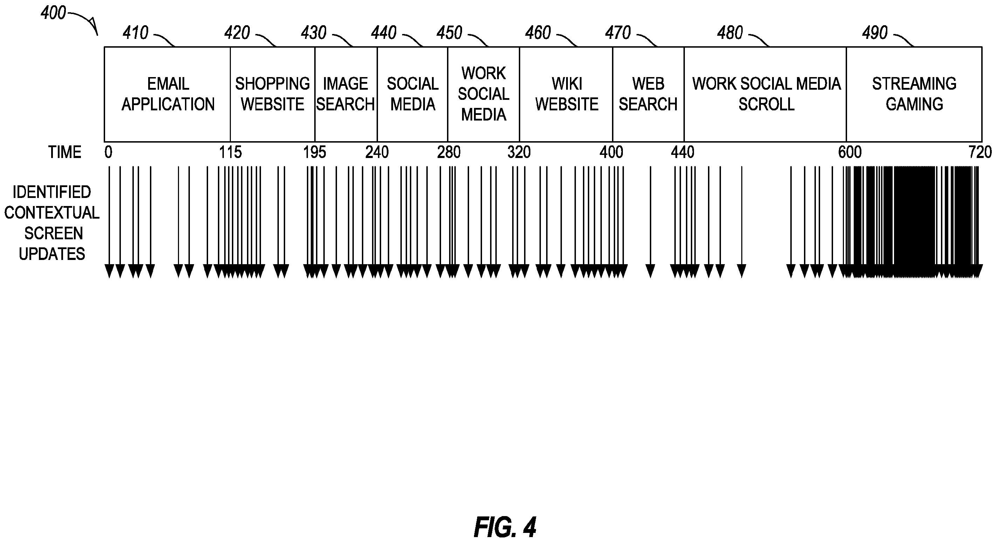

FIG. 4 illustrates a use case for screen capture, with an example timeline 400 to represent user screen activity on a computing system. Here, this timeline 400 indicates a sequence of which respective applications are being used and for how many seconds, in an example workload. It will be understood that the particular user actions and applications identified are provided for purposes of illustration, and that many variations in screen activity may occur with the same and different applications.

For instance, the timeline 400 shows that from time 0 to time 115, an email application screen context 410 is presented to a user. This results in captured user activity as the user engages with the application to read text, write text, view attachments, etc. From time *115* to *195,* the user interacts with a shopping website 420, followed by an image search 430 from time *195* to *240* which is related to the shopping. From time *240* until time *280,* the user engages a dedicated social media application 440 on the computing device and views textual and graphical information related to other people and interests. Based on the amount of user activity and the amount and type of changes in the text and graphical content, contextual screen updates can be identified at varying frequencies.

Similar actions occur thereafter with the use of a work social media application 450, another website 460 (e.g., a wiki page presented in a web browser with text content and scrolling), a web search 470 in the web browser on an entirely new topic, continued scrolling of the work social media application 480, and finally the viewing of a streaming gaming service 490. In particular, the use of the work social media application 480 and the streaming gaming service 490 demonstrates the streaming of video and a high rate of screen updates, versus a low rate that previously occurred. For example, from time 500 until 530, no activity occurs and no new content is presented on the screen, and thus no captured screen changes are indicated. From time 600 until time 720, the streaming of video presents an ongoing sequence of screen changes. This capture of video produces a high rate of screen updates.

As a further example, consider a scenario when the user operates the work social media application 480 and the user scrolls through textual content at an average of 1 line per second, whereas a user viewing the gaming video content from the streaming gaming service 490 might remain on the screen for hundreds of seconds. With this sample workload, a naive background context system might capture 15fps during this entire 720 seconds (producing 10,800 frames) and provide these frames to be processed with AI networks. Using techniques discussed herein, the number of frames to be analyzed is reduced significantly. A video playing for 200 seconds, in a worst case, would be 3000 frames (assuming 15fps video). For the remaining time (720s -200s = 520s) every second from scrolling would also be captured, producing additional frames. With the use of identified contextual screen updates, a total of 3520 frames would be captured and processed instead of the 10800 frames; resulting in a reduction of ∼67% of the AI processing.

Further enhancements to the techniques above may involve aspects of security and privacy controls. A user may not desire that certain types of screen content be captured and processed for security or privacy reasons. The techniques discussed herein provide multiple mechanisms to address such issues. First, an application can indicate that certain content is protected. This protection may be applied to documents like PDFs, or may involve protected media content such as movies received through a streaming service (e.g., Netflix^{®}) or other digital-rights protected content. Second, a user can provide settings or preferences to require that specific content (or activity in an application or application context) is protected. In this scenario, the application or GPU may insert a watermark to render areas of such content. When a watermark is detected, the system through the GPU driver can prevent a buffer of screen capture data from being shared with the AI service (e.g., through existing buffer protection methods such as encryption, secure memory, etc.). Company or organization security policies relating to sensitive or confidential materials may also be integrated with these techniques.

Other adaptations to contextual screen capture operations may be provided and customized based on user preferences. In addition to privacy selection, user-configurable options may control the level of capture detail and frame rate based on individual or organizational needs and preferences. Other adaptations may be provided based on battery-saving mode, system resources, or other technical settings. For instance, in a battery-saving mode the system can automatically engage optimized capture settings when battery life is low-such as reducing the captured frame rate and setting an additional threshold for changes to a screen capture frame before AI-processing is enabled.

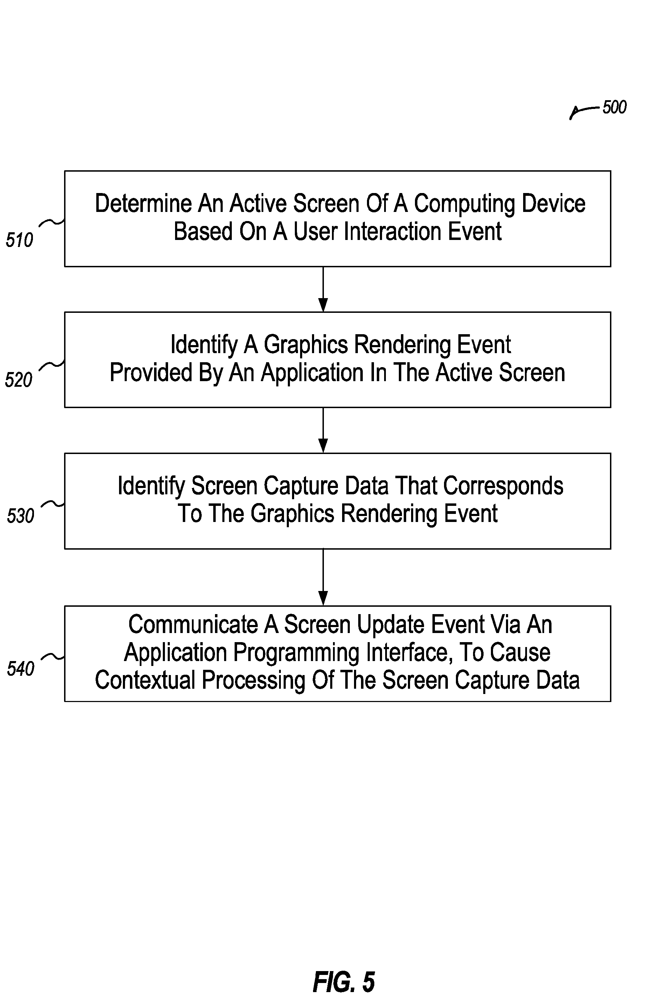

FIG. 5 illustrates a flowchart of a method for contextual screen capture data processing. The method may implement the scenarios discussed with reference to FIGS. 1 to 4, discussed above, or a variation of such scenarios. In an example, the method may be implemented in a computing system including a memory device (e.g., storage memory such as non-volatile memory, or in volatile memory) that stores processing instructions and data, and processing circuitry (e.g., at least one processor) that executes processing instructions. In another example, the method may be implemented by at least one non-transitory machine-readable medium capable of storing instructions, where the instructions when executed by at least one processor cause the at least one processor to perform the method.

Operation 510 of the flowchart 500 includes determining an active screen of a computing device based on a user interaction event. In an example, this determination includes identifying the active screen of the computing device based in part on an application event provided from a software application presented in the active screen. In another example, this determination includes identifying the active screen of the computing device based in part on an interaction event that originates from input of a human interface device operably coupled to the computing device.

Operation 520 of the flowchart 500 includes identifying a graphics rendering event provided by a software application in the active screen. In an example, this graphics rendering event is generated by the software application in a foreground of the active screen. For example, the graphics rendering event may be indicated via a DirectX Graphics Infrastructure (DXGI) platform, and such as an event corresponding to a dirty rectangle update in the DXGI platform. Other examples of events and rendering scenarios are discussed above.

Operation 530 of the flowchart 500 includes identifying screen capture data that corresponds to the graphics rendering event. In an example, this may optionally include determining an amount of a change between a first frame and a second frame of the screen capture data, based on the graphics rendering event, and causing a contextual screen update event to be generated (or communicated) based on the amount of the change.

Operation 540 of the flowchart 500 includes communicating a screen update event via an application programming interface (e.g., an API of a GPU driver), to cause an AI engine or another service to perform contextual processing of the screen capture data. In an example, the method and the API is implemented in a GPU driver of graphics processing circuitry, such as a GPU driver installed in an operating system of the computing device that provides an interface between the operating system and functions of the GPU. Such graphics processing circuitry may comprise at least one GPU or at least one GPU device.

Consistent with the examples above, the service may be an AI inferencing engine (e.g., operated by the operating system of the computing device), and the contextual screen update event causes the AI inferencing engine to pause or resume processing of respective screen captures provided from the buffer. This AI inferencing engine may be configured to generate tokens corresponding to contextual information in the respective screen captures, such as textual tokens usable in a transformer model of a generative AI service. In further examples, the graphics rendering event is used to determine a model (e.g., a specific neural network) used by the AI inferencing engine to convert graphical data of the screen capture data into the textual tokens.

FIG. 6 is a block diagram illustrating a configuration of a computing system 600 adapted for contextual screen capture data processing based on the techniques discussed above. As shown, the computing system 600 may include an operating system 610 that executes software applications 620, a generative AI service interface 630, and an AI inferencing engine 640. For instance, consistent with the examples above, the AI inferencing engine 640 may create tokens based on the use of the software applications 620 and content presented therein. These tokens are then provided to a generative AI service interface 630 (e.g., an interface to a service operating locally or remotely, such as ChatGPT) that generates data (e.g., in response to user requests).

The operating system 610 also includes a GPU driver 650 that provides software functionality for GPU hardware 660 and related graphics processing circuitry. The GPU driver 650 may provide contextual screen update events to the AI inferencing engine 640 as discussed above. Other computing functions discussed herein may be directly implemented by the operating system 610 or the software 620, 630, 640.

Embodiments to implement the approaches above may be implemented in one or a combination of hardware, firmware, and software. Embodiments may also be implemented as instructions stored on a machine-readable storage device, which may be read and executed by at least one processor to perform the operations described herein. A machine-readable storage device may include any non-transitory mechanism for storing information in a form readable by a machine (e.g., a computer). For example, a machine-readable storage device may include read-only memory (ROM), random-access memory (RAM), magnetic disk storage media, optical storage media, flash-memory devices, and other storage devices and media (e.g., represented in portions of computer system 700 in FIG. 7, discussed below).

A processor subsystem (e.g., processor 702 in FIG. 7, discussed below) may be used to execute the instruction on the computer-readable medium. The processor subsystem may include one or more processors, each with one or more cores. Additionally, the processor subsystem may be disposed on one or more physical devices. The processor subsystem may include one or more specialized processors, such as a graphics processing unit (GPU), a digital signal processor (DSP), a field programmable gate array (FPGA), or a fixed function processor.

Examples, as described herein, may include, or may operate on, logic or a number of components, modules, or mechanisms. Such components may be hardware, software, or firmware communicatively coupled to one or more processors in order to carry out the operations described herein. Components may be hardware components, and as such components may be considered tangible entities capable of performing specified operations and may be configured or arranged in a certain manner. In an example, circuits may be arranged (e.g., internally or with respect to external entities such as other circuits) in a specified manner as a component. In an example, the whole or part of one or more computer systems (e.g., a standalone, client or server computer system) or one or more hardware processors may be configured by firmware or software (e.g., instructions, an application portion, or an application) as a component that operates to perform specified operations. In an example, the software may reside on a machine-readable medium. In an example, the software, when executed by the underlying hardware of the component, causes the hardware to perform the specified operations. Accordingly, a hardware component is understood to encompass a tangible entity, be that an entity that is physically constructed, specifically configured (e.g., hardwired), or temporarily (e.g., transitorily) configured (e.g., programmed) to operate in a specified manner or to perform part or all of any operation described herein. Considering examples in which components are temporarily configured, each of the components need not be instantiated at any one moment in time. For example, where the components comprise a general-purpose hardware processor configured using software; the general-purpose hardware processor may be configured as respective different components at different times. Software may accordingly configure a hardware processor, for example, to constitute a particular component at one instance of time and to constitute a different component at a different instance of time. Components may also be software or firmware implementations, which operate to perform the methodologies described herein.

Circuitry or circuits, as used in this document, may comprise, for example, singly or in any combination, hardwired circuitry, programmable circuitry such as computer processors comprising one or more individual instruction processing cores, state machine circuitry, and/or firmware that stores instructions executed by programmable circuitry. The circuits, circuitry, or components may, collectively or individually, be embodied as circuitry that forms part of a larger system, for example, an integrated circuit (IC), system on-chip (SoC), desktop computers, laptop computers, tablet computers, servers, smart phones, etc.

As used in the present disclosure, the term "logic" may refer to firmware and/or circuitry configured to perform any of the aforementioned operations. Firmware may be embodied as code, instructions or instruction sets and/or data that are hard-coded (e.g., nonvolatile) in memory devices and/or circuitry.

"Circuitry," as used in the present disclosure, may comprise, for example, singly or in any combination, hardwired circuitry, programmable circuitry, state machine circuitry, logic and/or firmware that stores instructions executed by programmable circuitry. The circuitry may be embodied as an integrated circuit, such as an integrated circuit chip. In some embodiments, the circuitry may be formed, at least in part, by the processor circuitry executing code and/or instructions sets (e.g., software, firmware, etc.) corresponding to the functionality described herein, thus transforming a general-purpose processor into a specific-purpose processing environment to perform one or more of the operations described herein. In some embodiments, the processor circuitry may be embodied as a stand-alone integrated circuit or may be incorporated as one of several components on an integrated circuit. In some embodiments, the various components and circuitry of the node or other systems may be combined in a system-on-a-chip (SoC) architecture.

FIG. 7 is a block diagram illustrating a machine in the example form of a computer system 700, within which a set or sequence of instructions may be executed to cause the machine to perform any one of the methodologies discussed herein. In alternative embodiments, the machine operates as a standalone device or may be connected (e.g., networked) to other machines. In a networked deployment, the machine may operate in the capacity of either a server or a client machine in server-client network environments, or it may act as a peer machine in peer-to-peer (or distributed) network environments. The machine may be a vehicle subsystem, a personal computer (PC), a tablet PC, a hybrid tablet, a smartphone or other mobile telephone, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein. Similarly, the term "processor-based system" shall be taken to include any set of one or more machines that are controlled by or operated by a processor (e.g., a computer) to individually or jointly execute instructions to perform any one or more of the methodologies discussed herein.

Example computer system 700 includes at least one processor 702 (e.g., a central processing unit (CPU), a graphics processing unit (GPU) or both, processor cores, compute nodes, etc.), a main memory 704 and a static memory 706, which communicate with each other via a link 708 (e.g., interconnect or bus). The computer system 700 may further include a video display unit 710, an alphanumeric input device 712 (e.g., a keyboard), and a user interface (UI) navigation device 714 (e.g., a mouse). In one aspect, the video display unit 710, input device 712 and UI navigation device 714 are incorporated into a touch screen display. The computer system 700 may additionally include a storage device 716 (e.g., a drive unit), a signal generation device 718 (e.g., a speaker), a network interface device 720, and one or more sensors (not shown), such as a global positioning system (GPS) sensor, compass, accelerometer, gyrometer, magnetometer, or other sensor.

The storage device 716 includes a machine-readable medium 722 on which is stored one or more sets of data structures and instructions 724 (e.g., software) embodying or utilized by any one or more of the methodologies or functions described herein. The instructions 724 may also reside, completely or at least partially, within the main memory 704, static memory 706, and/or within the processor 702 during execution thereof by the computer system 700, with the main memory 704, static memory 706, and the processor 702 also constituting machine-readable media. As an example, the software instructions 724 may include instructions to implement and execute the screen capture approaches discussed above via the processor (e.g., with software as configured and operated in the examples of FIG. 1 to FIG. 6). As a further example, the main memory 704 (or the other memory or storage) may host various data 727 used with the screen capture processing and related AI data processing operations discussed herein.

While the machine-readable medium 722 is illustrated in an example aspect to be a single medium, the term "machine-readable medium" may include a single medium or multiple media (e.g., a centralized or distributed database, and/or associated caches and servers) that store the one or more instructions 724. The term "machine-readable medium" shall also be taken to include any tangible medium that is capable of storing, encoding or carrying instructions for execution by the machine and that cause the machine to perform any one or more of the methodologies of the present disclosure or that is capable of storing, encoding or carrying data structures utilized by or associated with such instructions. The term "machine-readable medium" shall accordingly be taken to include, but not be limited to, solid-state memories, and optical and magnetic media. Specific examples of machine-readable media include non-volatile memory, including but not limited to, by way of example, semiconductor memory devices (e.g., electrically programmable read-only memory (EPROM), electrically erasable programmable read-only memory (EEPROM)) and flash memory devices; magnetic disks such as internal hard disks and removable disks; magnetooptical disks; and CD-ROM and DVD-ROM disks.

The instructions 724 may further be transmitted or received over a communications network 726 using a transmission medium via the network interface device 720 utilizing any one of a number of well-known transfer protocols (e.g., HTTP). Examples of communication networks include a local area network (LAN), a wide area network (WAN), the Internet, mobile telephone networks, plain old telephone (POTS) networks, and wireless data networks (e.g., Bluetooth, Wi-Fi, 3G, and 4G LTE/LTE-A, 5G, 6G, DSRC, or satellite communication networks). The term "transmission medium" shall be taken to include any intangible medium that is capable of storing, encoding, or carrying instructions for execution by the machine, and includes digital or analog communications signals or other intangible medium to facilitate communication of such software.

The above detailed description includes references to the accompanying drawings, which form a part of the detailed description. The drawings show, by way of illustration, specific embodiments that may be practiced. These embodiments are also referred to herein as "examples." Such examples may include elements in addition to those shown or described. However, also contemplated are examples that include the elements shown or described. Moreover, also contemplated are examples using any combination or permutation of those elements shown or described (or one or more aspects thereof), either with respect to a particular example (or one or more aspects thereof), or with respect to other examples (or one or more aspects thereof) shown or described herein.

Additional examples of the presently described embodiments include the following, non-limiting implementations. Each of the following non-limiting examples may stand on its own or may be combined in any permutation or combination with any one or more of the other examples provided below or throughout the present disclosure.

Example 1 is a computing device, comprising: a graphics processing circuitry including a buffer; and processing circuitry configured to: determine an active screen of the computing device based on a user interaction event; identify a graphics rendering event associated with a software application presented in the active screen; identify screen capture data in the buffer of the graphics processing circuitry that corresponds to the graphics rendering event; and communicate a contextual screen update event via an application programming interface, the contextual screen update event to cause a service to perform contextual processing of the screen capture data.

In Example 2, the subject matter of Example 1 optionally includes subject matter where the graphics rendering event is generated by the software application in a foreground of the active screen.

In Example 3, the subject matter of Example 2 optionally includes subject matter where the graphics rendering event is indicated via a DirectX Graphics Infrastructure (DXGI) platform, and wherein the graphics rendering event corresponds to a dirty rectangle update in the DXGI platform.

In Example 4, the subject matter of any one or more of Examples 1-3 optionally include the processing circuitry further configured to: determine an amount of a change between a first frame and a second frame of the screen capture data, based on the graphics rendering event; wherein the contextual screen update event is generated based on the amount of the change.

In Example 5, the subject matter of any one or more of Examples 1-4 optionally include subject matter where to determine the active screen of the computing device is based in part on an application event provided from the software application.

In Example 6, the subject matter of any one or more of Examples 1-5 optionally include subject matter where to determine the active screen of the computing device is based in part on an interaction event, the interaction event originating from input of a human interface device operably coupled to the computing device.

In Example 7, the subject matter of any one or more of Examples 1-6 optionally include subject matter where the graphics processing circuitry comprises at least one graphics processing unit (GPU), wherein the application programming interface is provided by a driver installed in an operating system of the computing device, and wherein the driver provides an interface between the operating system and functions of the at least one GPU.

In Example 8, the subject matter of any one or more of Examples 1-7 optionally include subject matter where the service is an AI inferencing engine, and wherein the contextual screen update event causes the AI inferencing engine to pause or resume processing of respective screen captures provided from the buffer.

In Example 9, the subject matter of Example 8 optionally includes subject matter where the AI inferencing engine is configured to generate tokens corresponding to contextual information in the respective screen captures.

In Example 10, the subject matter of Example 9 optionally includes subject matter where the tokens corresponding to the contextual information are textual tokens usable in a transformer model of a generative AI service, and wherein the graphics rendering event is used to determine a model used by the AI inferencing engine to convert graphical data of the screen capture data into the textual tokens.

Example 11 is at least one non-transitory machine-readable medium capable of storing instructions, wherein the instructions when executed by at least one processor of a computing device, cause the at least one processor to: determine an active screen of the computing device based on a user interaction event; identify a graphics rendering event associated with a software application presented in the active screen; identify screen capture data in a buffer that corresponds to the graphics rendering event; and communicate a contextual screen update event via an application programming interface, the contextual screen update event to cause a service to perform contextual processing of the screen capture data.

In Example 12, the subject matter of Example 11 optionally includes subject matter where the graphics rendering event is generated by the software application in a foreground of the active screen.

In Example 13, the subject matter of Example 12 optionally includes subject matter where the graphics rendering event is indicated via a DirectX Graphics Infrastructure (DXGI) platform, and wherein the graphics rendering event corresponds to a dirty rectangle update in the DXGI platform.

In Example 14, the subject matter of any one or more of Examples 11-13 optionally include subject matter where the instructions further cause the at least one processor to: determine an amount of a change between a first frame and a second frame of the screen capture data, based on the graphics rendering event; wherein the contextual screen update event is generated based on the amount of the change.

In Example 15, the subject matter of any one or more of Examples 11-14 optionally include subject matter where to determine the active screen of the computing device is based in part on an application event provided from the software application.

In Example 16, the subject matter of any one or more of Examples 11-15 optionally include subject matter where to determine the active screen of the computing device is based in part on an interaction event, the interaction event originating from input of a human interface device operably coupled to the computing device.

In Example 17, the subject matter of any one or more of Examples 11-16 optionally include subject matter where the application programming interface is provided by a driver installed in an operating system of the computing device, and wherein the driver provides an interface between the operating system and functions of at least one graphics processing unit (GPU).

In Example 18, the subject matter of any one or more of Examples 11-17 optionally include subject matter where the service is an AI inferencing engine, and wherein the contextual screen update event causes the AI inferencing engine to pause or resume processing of respective screen captures provided from the buffer.

In Example 19, the subject matter of Example 18 optionally includes subject matter where the AI inferencing engine is configured to generate tokens corresponding to contextual information in the respective screen captures.

In Example 20, the subject matter of Example 19 optionally includes subject matter where the tokens corresponding to the contextual information are textual tokens usable in a transformer model of a generative AI service, and wherein the graphics rendering event is used to determine a model used by the AI inferencing engine to convert graphical data of the screen capture data into the textual tokens.

Example 21 is a method for screen capture data processing in a computing device, comprising: determining an active screen of the computing device based on a user interaction event; identifying a graphics rendering event associated with a software application presented in the active screen; identifying screen capture data in a buffer that corresponds to the graphics rendering event; and communicating a contextual screen update event via an application programming interface of a graphics processing unit (GPU) driver, the contextual screen update event to cause a service to perform contextual processing of the screen capture data.

In Example 22, the subject matter of Example 21 optionally includes subject matter where the graphics rendering event is generated by the software application in a foreground of the active screen.

In Example 23, the subject matter of Example 22 optionally includes subject matter where the graphics rendering event is indicated via a DirectX Graphics Infrastructure (DXGI) platform, and wherein the graphics rendering event corresponds to a dirty rectangle update in the DXGI platform.

In Example 24, the subject matter of any one or more of Examples 21-23 optionally include determining an amount of a change between a first frame and a second frame of the screen capture data, based on the graphics rendering event; wherein the contextual screen update event is generated based the amount of the change.

In Example 25, the subject matter of any one or more of Examples 21-24 optionally include subject matter where determining the active screen of the computing device is based in part on an application event provided from the software application.

In Example 26, the subject matter of any one or more of Examples 21-25 optionally include subject matter where determining the active screen of the computing device is based in part on an interaction event, the interaction event originating from input of a human interface device operably coupled to the computing device.

In Example 27, the subject matter of any one or more of Examples 21-26 optionally include subject matter where the GPU driver is installed in an operating system of the computing device, and wherein the GPU driver provides an interface between the operating system and functions of a GPU device.

In Example 28, the subject matter of any one or more of Examples 21-27 optionally include subject matter where the service is an AI inferencing engine, and wherein the contextual screen update event causes the AI inferencing engine to pause or resume processing of respective screen captures provided from the buffer.

In Example 29, the subject matter of Example 28 optionally includes subject matter where the AI inferencing engine is configured to generate tokens corresponding to contextual information in the respective screen captures.

In Example 30, the subject matter of Example 29 optionally includes subject matter where the tokens corresponding to the contextual information are textual tokens usable in a transformer model of a generative AI service, and wherein the graphics rendering event is used to determine a model used by the AI inferencing engine to convert graphical data of the screen capture data into the textual tokens.

Example 31 is at least one machine-readable medium including instructions that, when executed by processing circuitry, cause the processing circuitry to perform operations to implement of any of Examples 1-30.

Example 32 is an apparatus comprising means to implement of any of Examples 1-30.

Example 33 is a system to implement of any of Examples 1-30.

Example 34 is a method to implement of any of Examples 1-30.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In the appended claims, the terms "including" and "in which" are used as the plain-English equivalents of the respective terms "comprising" and "wherein." Also, in the following claims, the terms "including" and "comprising" are open-ended, that is, a system, device, article, or process that includes elements in addition to those listed after such a term in a claim are still deemed to fall within the scope of that claim. Moreover, in the following claims, the terms "first," "second," and "third," etc. are used merely as labels, and are not intended to suggest a numerical order for their objects.

The above description is intended to be illustrative, and not restrictive. For example, the above-described examples (or one or more aspects thereof) may be used in combination with others. Other embodiments may be used, such as by one of ordinary skill in the art upon reviewing the above description. The Abstract is to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. However, the claims may not set forth every feature disclosed herein as embodiments may feature a subset of said features. Further, embodiments may include fewer features than those disclosed in a particular example. Thus, the following claims are hereby incorporated into the Detailed Description, with a claim standing on its own as a separate aspect. The scope of the embodiments disclosed herein is to be determined with reference to the appended claims, along with the full scope of equivalents to which such claims are entitled.

## Claims

1. A computing device, comprising:
a graphics processing circuitry including a buffer; and
processing circuitry configured to:
determine an active screen of the computing device based on a user interaction event;
identify a graphics rendering event associated with a software application presented in the active screen;
identify screen capture data in the buffer of the graphics processing circuitry that corresponds to the graphics rendering event; and
communicate a contextual screen update event via an application programming interface, the contextual screen update event to cause a service to perform contextual processing of the screen capture data.

2. The computing device of claim 1, wherein the graphics rendering event is generated by the software application in a foreground of the active screen.

3. The computing device of claim 2, wherein the graphics rendering event is indicated via a DirectX Graphics Infrastructure (DXGI) platform, and wherein the graphics rendering event corresponds to a dirty rectangle update in the DXGI platform.

4. The computing device of any of claims 1 to 3, the processing circuitry further configured to:
determine an amount of a change between a first frame and a second frame of the screen capture data, based on the graphics rendering event;
wherein the contextual screen update event is generated based on the amount of the change.

5. The computing device of any of claims 1 to 4, wherein to determine the active screen of the computing device is based in part on an application event provided from the software application.

6. The computing device of any of claims 1 to 5, wherein to determine the active screen of the computing device is based in part on an interaction event, the interaction event originating from input of a human interface device operably coupled to the computing device.

7. The computing device of any of claims 1 to 6, wherein the graphics processing circuitry comprises at least one graphics processing unit (GPU), wherein the application programming interface is provided by a driver installed in an operating system of the computing device, and wherein the driver provides an interface between the operating system and functions of the at least one GPU.

8. The computing device of any of claims 1 to 7, wherein the service is an AI inferencing engine, and wherein the contextual screen update event causes the AI inferencing engine to pause or resume processing of respective screen captures provided from the buffer;
and optionally, wherein the AI inferencing engine is configured to generate tokens corresponding to contextual information in the respective screen captures;
and optionally, wherein the tokens corresponding to the contextual information are textual tokens usable in a transformer model of a generative AI service, and wherein the graphics rendering event is used to determine a model used by the AI inferencing engine to convert graphical data of the screen capture data into the textual tokens.

9. A method, performed by a computing device, comprising:
determining an active screen of the computing device based on a user interaction event;
identifying a graphics rendering event associated with a software application presented in the active screen;
identifying screen capture data in a buffer that corresponds to the graphics rendering event; and
communicating a contextual screen update event via an application programming interface, the contextual screen update event to cause a service to perform contextual processing of the screen capture data.

10. The method of claim 9, wherein the graphics rendering event is generated by the software application in a foreground of the active screen.

11. The method of claim 10, wherein the graphics rendering event is indicated via a DirectX Graphics Infrastructure (DXGI) platform, and wherein the graphics rendering event corresponds to a dirty rectangle update in the DXGI platform.

12. The method of any of claims 9 to 11, further comprising:
determining an amount of a change between a first frame and a second frame of the screen capture data, based on the graphics rendering event;
wherein the contextual screen update event is generated based on the amount of the change.

13. The method of any of claims 9 to 12, wherein determining the active screen of the computing device is based in part on an application event provided from the software application.

14. The method of any of claims 9 to 13, wherein determining the active screen of the computing device is based in part on an interaction event, the interaction event originating from input of a human interface device operably coupled to the computing device.

15. At least one machine-readable medium capable of storing instructions, wherein the instructions when executed by at least one processor of a computing device, cause the at least one processor to perform any of the methods of claims 9 to 14.
